# EUROPÄISCHE PATENTANMELDUNG

(11) **EP 3 588 228 A1**
(43) Veröffentlichungstag der Anmeldung: **01.01.2020**
(21) Anmeldenummer: 18180118.4
(22) Anmeldetag: 27.06.2018
(51) Int. Cl.: G05D 1/02

(54) **FAHRERLOSES TRANSPORTFAHRZEUG, ANORDNUNG UND VERFAHREN ZUR AUSGABE EINER ERWEITERTEN REALITÄT**

(71) Anmelder: Siemens Aktiengesellschaft, 80333 München (DE)
(72) Erfinder: Meyer-Delius Di Vasto, Daniel, 81541 München (DE)

(57) **Zusammenfassung**

Ein fahrerloses Transportfahrzeug (1) mit einer Recheneinheit (10) wird mit Projektoren (8) ausgerüstet, welche eine visuelle wahrnehmbare Information (9) in Abhängigkeit von einem internen Zustand des fahrerlosen Transportfahrzeugs ortsfest auf eine Umgebung (11) des fahrerlosen Transportfahrzeugs projizieren. Mittels dieser erweiterten Realität können Personen über ein bevorstehendes Fahrmanöver des fahrerlosen Transportfahrzeugs informiert werden, welche diese durch reine Beobachtung des fahrerlosen Transportfahrzeugs nicht vorhersagen könnten. Die visuelle Information kann beispielsweise anzeigen, in welcher Richtung das fahrerlose Transportfahrzeug an einer Kreuzung abbiegen wird. Auf diese Weise werden Risiken für Personen in der Nähe des fahrerlosen Transportfahrzeugs reduziert, da diese das Verhalten des fahrerlosen Transportfahrzeugs anhand der visuellen Information besser vorhersagen können. Weiterhin wird die Akzeptanz von fahrerlosen Transportfahrzeugen verbessert, da Personen, welche sich in der gleichen Umgebung aufhalten, die Aktionen des fahrerlosen Transportfahrzeugen besser verstehen. Auch eine Wartung oder Reparatur des fahrerlosen Transportfahrzeugs wird durch die Ausgabe der visuellen Information vereinfacht. Beispielsweise kann das fahrerlose Transportfahrzeug erkannte Hindernisse in der Umgebung mit der visuellen Information markieren. An einem Versatz der visuellen Information gegenüber dem Hindernis kann ein Wartungstechniker einen dejustierten Sensor unmittelbar erkennen und nachjustieren. Das Ergebnis der Kalibrierung lässt sich unmittelbar anhand der visuellen Information nachvollziehen.

## Beschreibung

Es sind fahrerlose Transportfahrzeuge bekannt, welche Markierungen auf einem Boden folgen oder frei durch eine Umgebung navigieren, welche auch von Personen beschritten wird. Derartige Fahrzeuge weisen üblicherweise unterschiedliche akustische und lichttechnische Einrichtungen auf, um Verkehrsteilnehmer oder andere Personen beispielsweise über eine Änderung ihrer Fahrtrichtung zu informieren. Neben Lautsprechern und Fahrtrichtungsanzeigern zählen auch Scheinwerfer zu dieser Ausstattung. Über Lautsprecher zeigen fahrerlose Transportfahrzeuge häufig an, dass sie sich fortbewegen oder in Kürze fortbewegen werden. Fahrtrichtungsanzeiger informieren andere Personen über ein geplantes Abbiegen, während die Annäherung eines fahrerlosen Transportfahrzeugs bei schlechten Lichtverhältnissen durch dessen Scheinwerfer sichtbar wird.

Die Position und Orientierung, beispielsweise eines fahrerlosen Transportfahrzeugs oder eines Sensors, wird im Folgenden auch unter dem Begriff "Pose" zusammengefasst.

Der Begriff "visuelle Information" beschreibt im Folgenden eine für den Menschen visuell wahrnehmbare Information.

Durch die vorliegende Erfindung soll eine Alternative zum Stand der Technik geschaffen werden.

Diese Aufgabe wird erfindungsgemäß durch ein fahrerloses Transportfahrzeug gelöst, mit einer Recheneinheit, programmiert zur Erzeugung einer visuellen Information in Abhängigkeit von einem internen Zustand des fahrerlosen Transportfahrzeugs, mit mindestens einem Projektor, und eingerichtet zur ortsfesten Projektion der visuellen Information auf eine Umgebung des fahrerlosen Transportfahrzeugs.

Die Anordnung umfasst mindestens ein fahrerloses Transportfahrzeug, eine Recheneinheit, programmiert zur Erzeugung einer visuellen Information in Abhängigkeit von einem internen Zustand des fahrerlosen Transportfahrzeugs, und mindestens einen Projektor, welcher in einer Umgebung des fahrerlosen Transportfahrzeugs stationär montiert ist. Die Anordnung ist zur ortsfesten Projektion der visuellen Information auf die Umgebung eingerichtet.

Bei dem Verfahren durchfährt ein fahrerloses Transportfahrzeug eine Umgebung. Eine Recheneinheit erzeugt eine visuelle Information in Abhängigkeit von einem internen Zustand des fahrerlosen Transportfahrzeugs. Mindestens ein Projektor projiziert die visuelle Information ortsfest auf die Umgebung.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Bei der ortsfesten Projektion der visuellen Information handelt es sich um eine Visualisierung, wie sie aus der erweiterten Realität (Augmented Reality) bekannt ist.

Die ortsfeste Projektion der visuellen Information bietet den Vorteil, dass Personen über ein bevorstehendes Fahrmanöver des fahrerlosen Transportfahrzeugs informiert werden können, welche diese durch reine Beobachtung des fahrerlosen Transportfahrzeugs nicht vorhersagen könnten. Die visuelle Information kann beispielsweise anzeigen, in welcher Richtung das fahrerlose Transportfahrzeug an einer Kreuzung abbiegen wird.

Die ortsfeste Projektion der visuellen Information kann genutzt werden, um das Verhalten des fahrerlosen Transportfahrzeugs für Personen besser vorhersagbar zu machen. Beispielsweise kann die ortsfeste Projektion der visuellen Information Personen darüber informieren, dass ein automatisierter Gabelstapler in Kürze in Betrieb genommen wird. Weiterhin interagieren fahrerlose Transportfahrzeuge häufig mit anderen Einrichtungen in ihrer Umgebung. So kann die ortsfeste Projektion der visuellen Information auch anzeigen, dass das fahrerlose Transportfahrzeug in Kürze eine automatische Tür öffnen oder einen Aufzug nutzen wird.

Auf diese Weise werden Risiken für Personen in der Nähe des fahrerlosen Transportfahrzeugs reduziert, da diese das Verhalten des fahrerlosen Transportfahrzeugs anhand der visuellen Information besser vorhersagen können. Weiterhin wird die Akzeptanz von fahrerlosen Transportfahrzeugen verbessert, da Personen, welche sich in der gleichen Umgebung aufhalten, die Aktionen des fahrerlosen Transportfahrzeugs besser verstehen und vorhersagen können.

Auch eine Wartung oder Reparatur des fahrerlosen Transportfahrzeugs wird durch die Ausgabe der visuellen Information vereinfacht. Beispielsweise kann das fahrerlose Transportfahrzeug erkannte Hindernisse in der Umgebung mit der visuellen Information markieren. An einem Versatz der visuellen Information gegenüber dem Hindernis kann ein Wartungstechniker einen dejustierten Sensor unmittelbar erkennen und nachjustieren. Das Ergebnis der Kalibrierung oder Justierung lässt sich unmittelbar anhand der visuellen Information nachvollziehen.

Der Projektor ist beispielsweise ein Videoprojektor oder ein Laserprojektor.

Die Recheneinheit des fahrerlosen Transportfahrzeugs ist beispielsweise ein Mikroprozessor oder Mikrocontroller, ein System-on-Chip oder ein programmierbarer Digitalbaustein, etwa ein "Field Programmable Gate Array" (FPGA).

Die Recheneinheit der Anordnung ist beispielsweise eine speicherprogrammierbare Steuerung, ein Mikroprozessor, eine Workstation, ein Server, ein Computernetzwerk oder eine Cloud.

Gemäß einer Ausführungsform ist die Recheneinheit programmiert für eine Ansteuerung des Projektors zur ortsfesten Aufrechterhaltung der Projektion der visuellen Information auf der Umgebung während einer Fahrt des fahrerlosen Transportfahrzeugs durch die Umgebung.

In einer Weiterbildung ist der Projektor zur ortsfesten Projektion der visuellen Information auf einen Boden der Umgebung und/oder auf Objekte in der Umgebung ausgerichtet.

Gemäß einer Ausführungsform symbolisiert die visuelle Information eine in Ausführung befindliche Aktion des fahrerlosen Transportfahrzeugs, eine beabsichtigte Aktion des fahrerlosen Transportfahrzeugs, eine Bahnplanung des fahrerlosen Transportfahrzeugs, eine Geschwindigkeit des fahrerlosen Transportfahrzeugs, eine Zielposition des fahrerlosen Transportfahrzeugs und/oder ein Hindernis grafisch oder textuell.

In einer Weiterbildung wird die visuelle Information solange projiziert, wie sich ein Bereich, in dem die visuelle Information ortsfest auf die Umgebung projiziert wird, in einem Projektionsbereich des Projektors befindet.

Gemäß einer Ausführungsform wird die visuelle Information projiziert, sobald das fahrerlose Transportfahrzeug einen vorgegebenen Abstand zu einem vorgegebenen Punkt unterschreitet.

In einer Weiterbildung wird die visuelle Information projiziert, sobald Sensoren des fahrerlosen Transportfahrzeugs ein Hindernis erfassen, welches nicht in einer Karte des fahrerlosen Transportfahrzeug enthalten ist.

Auf dem computerlesbaren Datenträger ist ein Computerprogramm gespeichert, welches das Verfahren ausführt, wenn es in einem Prozessor abgearbeitet wird.

Das Computerprogramm wird in einem Prozessor abgearbeitet und führt dabei das Verfahren aus.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Fig. 1: ein fahrerloses Transportfahrzeug 1 mit drei Projektoren,
- Fig. 2: ein fahrerloses Transportfahrzeug 1, welches durch eine Umgebung navigiert und als visuelle Information eine Bahnplanung 5 des fahrerlosen Transportfahrzeugs auf einen Boden einer Umgebung projiziert,
- Fig. 3: ein fahrerloses Transportfahrzeug 1, welches eine Zielposition 6 und eine Hindernis-Markierung 7 als visuelle Information auf eine Umgebung projiziert, und
- Fig. 4: ein fahrerloses Transportfahrzeug 1, welches mittels einer Recheneinheit 10 Projektoren 8 derart ansteuert, dass eine visuelle Information 9 ortsfest auf eine Umgebung 11 projiziert wird.

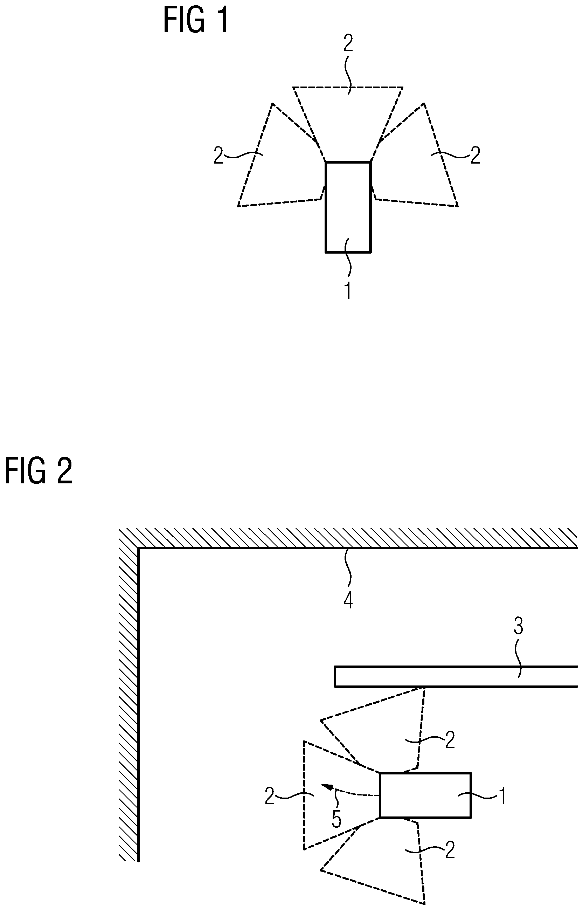

Figur 1 zeigt ein fahrerloses Transportfahrzeug 1 mit drei Projektoren, welche jeweils einen Projektionsbereich 2 ausleuchten. Selbstverständlich kann auch nur ein einziger Projektor zum Einsatz kommen. Die Anzahl und Technologie der Projektoren kann grundsätzlich frei gewählt werden. Die Projektoren, welche beispielsweise vorne auf einem Fahrgestell des fahrerlosen Transportfahrzeugs 1 montiert und in unterschiedliche Richtungen ausgerichtet sind, ermöglichen die Ausgabe einer erweiterten Realität. Sie können dazu genutzt werden, eine visuelle Information in Abhängigkeit von einem internen Zustand des fahrerlosen Transportfahrzeugs ortsfest auszugeben. Die visuelle Information bezeichnet beispielsweise ein Fahrmanöver, welches das fahrerlose Transportfahrzeug 1 gerade ausführt oder in Kürze ausführen wird. Ortsfest bedeutet, dass die visuelle Information im Wesentlichen ortsstabil, also innerhalb eines vorgegebenen Bereichs der Umgebung, auf die Umgebung projiziert wird, und zwar selbst dann, wenn sich das fahrerlose Transportfahrzeug 1 selbst fortbewegt. Im Idealfall erscheint die visuelle Information also - selbst während einer Fahrt des fahrerlosen Transportfahrzeugs 1 - gänzlich unbewegt in der Umgebung.

Abhängig von der Art der Projektoren und ihrer Konfiguration können unterschiedliche Arten von visuellen Informationen projiziert werden. Ein erstes Beispiel ist in Figur 2 gezeigt.

Figur 2 zeigt ein fahrerloses Transportfahrzeug 1, welches durch eine Umgebung mit einem Hindernis 3 und einer Wand 4 navigiert und als visuelle Information eine Bahnplanung 5 des fahrerlosen Transportfahrzeugs 1 als zweidimensionale Darstellung auf einen Boden projiziert. Die visuelle Information kann farblich kodiert werden, um beispielsweise eine geplante Fahrgeschwindigkeit anzuzeigen. Weiterhin können die Umrisse des fahrerlosen Transportfahrzeugs 1 in die zweidimensionale Darstellung der Bahnplanung 5 auf einem Boden aufgenommen werden, sodass Personen vorab darüber informiert werden, welche Bereiche des Bodens von dem fahrerlosen Transportfahrzeug 1 überfahren werden, wenn dieses den geplanten Fahrweg zurücklegt.

Ein weiteres Beispiel für eine visuelle Information ist eine Zielposition, welche im internen Zustand des fahrerlosen Transportfahrzeugs 1 enthalten, also beispielsweise in einem Arbeitsspeicher des fahrerlosen Transportfahrzeugs 1 abgelegt ist. Sobald die Zielposition von einem der drei Projektionsbereiche 2 überstrichen wird, kann eine entsprechende visuelle Information ortsfest auf die Zielposition projiziert werden, um diese an außenstehende Personen auszugeben. Auch hierbei kann der Umriss des fahrerlosen Transportfahrzeugs 1 in die visuelle Information aufgenommen werden, um zu visualisieren, welcher Bereich von dem fahrerlosen Transportfahrzeug 1 überdeckt werden wird. Weiterhin können auch textuelle Informationen als visuelle Information projiziert werden, beispielsweise ein Identifikator oder Name der Zielposition.

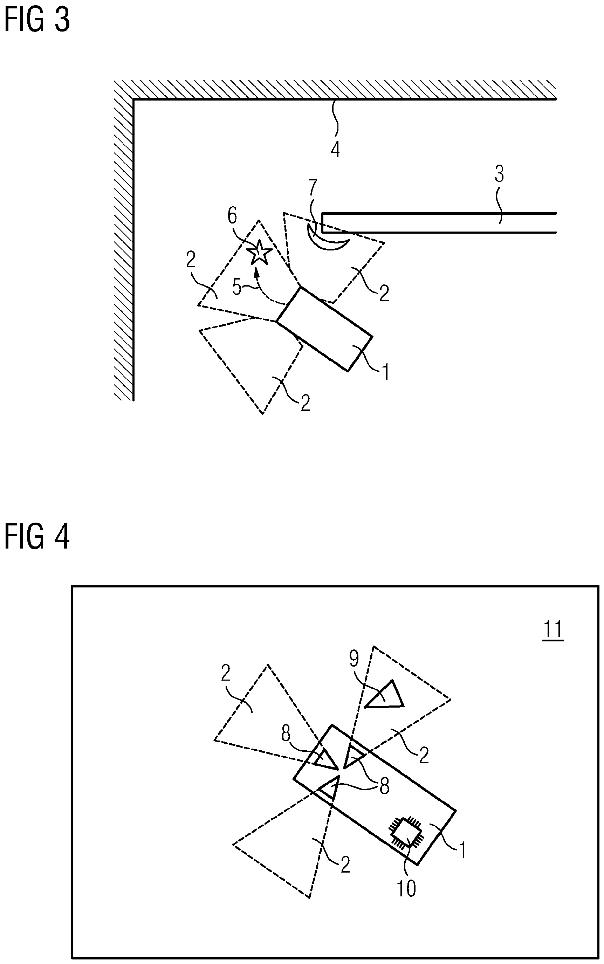

Figur 3 zeigt das fahrerlose Transportfahrzeug 1, nachdem eine Zielposition 6 vom Projektionsbereich 2 des mittleren Projektors erfasst wurde. Die Zielposition 6 kann nun als Sternsymbol auf den Boden der Umgebung projiziert werden.

Neuere fahrerlose Transportfahrzeuge verfügen über Sensoren wie Kameras und Laserscanner, mit welchen sie autonom eine Karte ihrer Umgebung erstellen und zur Navigation verwenden. Aus den Informationen, welche durch diese Sensoren erfasst werden, ergeben sich weitere Möglichkeiten für visuelle Informationen, welche auf die Umgebung projiziert werden können. Figur 3 zeigt den Fall, dass auf oder vor ein erkanntes Hindernis, hier das Hindernis 3, als potentielles Kollisionsobjekt eine Hindernis-Markierung 7 projiziert wird. Die Hindernis-Markierung 7 kann hierbei aus einer Beleuchtung des Hindernisses 3 mit Licht in einer vorgegebenen Farbe bestehen. Alternativ kann die Hindernis-Markierung 7 wie in Figur 3 gezeigt als halbmondförmiges Symbol auf den Boden projiziert werden. Selbstverständlich sind beliebige andere grafische und textuelle Ausgestaltungen möglich.

Figur 4 zeigt erneut ein fahrerloses Transportfahrzeug 1, welches eine Umgebung 11 durchfährt. Eine Recheneinheit 10 erzeugt eine visuelle Information 9 in Abhängigkeit von einem internen Zustand des fahrerlosen Transportfahrzeugs 1. Einer von drei Projektoren 8 mit je drei Projektionsbereichen 2 projiziert die visuelle Information 9 ortsfest auf die Umgebung 11.

Grundsätzlich kann die visuelle Information 9 aus jedem beliebigen Aspekt des internen Zustands des fahrerlosen Transportfahrzeugs 1 abgeleitet werden. Limitierend auf die Darstellung der visuellen Information 9 wirken lediglich die Art und Anordnung der Projektoren 8. Diese bestimmen nicht nur die Abmessungen der Projektionsbereiche 2, sondern auch die grafischen Gestaltungsmöglichkeiten der visuellen Information 9. So unterscheiden sich die Formen und Farben, welche mittels eines Laserprojektors projiziert werden können, beispielsweise rote Linien, deutlich von den Videobildern, welche ein kleinformatiger und für robuste Industrieanwendungen zugeschnittener Videoprojektor projizieren kann.

Die ortsfeste Projektion der visuellen Information 9 in die Umgebung 11 erfordert eine Kalibrierung aller beteiligten Systeme sowie eine mathematische Transformation, deren Algorithmen aus den Fachgebieten der erweiterten Realität sowie der Robotik hinreichend bekannt sind. Grundsätzlich sollten die Projektoren 8 gegenüber dem fahrerlosen Transportfahrzeug 1 selbst sowie auch untereinander kalibriert werden. Hierbei wird die genaue Pose jedes einzelnen Projektors 8 relativ zu der Pose des fahrerlosen Transportfahrzeugs 1 und relativ zu jedem anderen Projektor 8 ermittelt. Um eine genaue Überlappung der Projektionen mit einer internen Karte des fahrerlosen Transportfahrzeugs 1 zu erreichen, müssen natürlich auch die Sensoren, anhand derer das fahrerlose Transportfahrzeug 1 seine Karte erstellt, in die Kalibrierung mit einbezogen werden. Die letztendlichen Algorithmen zur Kalibrierung hängen von der konkreten Technologie der Sensoren und Projektoren 8 ab und sind aus dem Stand der Technik hinreichend bekannt.

Ausgehend von den im Zuge der Kalibrierung ermittelten Posen der beteiligten Komponenten wird eine mathematische Transformation spezifiziert, mit welcher die visuelle Information 9 ortsfest an den gewünschten Punkt in der Umgebung 11 projiziert werden kann. Mittels der mathematischen Transformation kann die ortsfeste Projektion selbst dann fortlaufend neuberechnet und aufrecht erhalten werden, wenn sich das fahrerlose Transportfahrzeug 1 selbst fortbewegt. Die mathematische Transformation wird in Abhängigkeit von der visuellen Information 9 bzw. den zugrundeliegenden Daten und der Technologie der Projektoren 8 gewählt. Beispielsweise ermöglicht es eine klassische perspektivische Projektion (etwa eine orthographische Projektion) als mathematische Transformation, zweidimensionale oder dreidimensionale Punkte als visuelle Information 9 aus einem internen Koordinatensystem des fahrerlosen Transportfahrzeugs 1 auf eine zweidimensionale Ebene in der Umgebung 11, etwa einen Boden, abzubilden. Sofern nicht nur ein Projektor 8, sondern wie in Figur 4 gezeigt mehrere Projektoren 8 auf dem Fahrgestell des fahrerlosen Transportfahrzeugs 1 montiert sind, besteht ein weiterer Rechenschritt in der Ermittlung des Projektors 8, welcher zur Projektion der visuellen Information 9 genutzt werden soll, da sich sein Projektionsbereich 2 hierfür am besten eignet. Diesem Rechenschritt kommt insbesondere dann Bedeutung zu, wenn sich die Projektionsbereiche 2 überlappen oder die visuelle Information 9 in mehreren Projektionsbereichen 2 erscheint.

Um Energie zu sparen, kann es vorteilhaft sein, die visuelle Information 9 nur zu bestimmten Zeiten zu projizieren, statt sie stets auszugeben. Eine erste Möglichkeit besteht darin, die Projektion einzuschalten, sobald Sensoren des fahrerlosen Transportfahrzeugs 1 ein Hindernis detektieren. Weiterhin kann die Projektion vorausschauend durch das fahrerlose Transportfahrzeug 1 aktiviert werden, wenn sein interner Zustand dies nahelegt. Ein solcher Anlass kann etwa bestehen, wenn das fahrerlose Transportfahrzeug 1 laut seiner internen Karte auf eine Kreuzung zufährt. Ein weiterer Anlass wäre die Detektion dynamischer Objekte wie etwa Personen durch das fahrerlose Transportfahrzeug 1, welche in seiner internen Karte nicht verzeichnet sind und sich von den üblichen statischen Hindernissen in der Karte unterscheiden. Wenn die Sensoren des fahrerlosen Transportfahrzeug 1 ein solch unerwartetes und dynamisches Objekt, etwa einen Fussgänger, erfassen, kann die Projektion eingeschaltet werden.

Die Projektion der visuellen Information 9 in die Umgebung 11 verbessert nicht nur die Betriebssicherheit des fahrerlosen Transportfahrzeugs 1, sondern in der Folge auch dessen Akzeptanz durch den Menschen. Weiterhin können ggf. Aufwände für Entwicklung, Betrieb und Wartung des fahrerlosen Transportfahrzeugs 1 reduziert werden. So ermöglicht die Projektion relevanter Aspekte des internen Zustands des fahrerlosen Transportfahrzeugs 1 als visuelle Information 9 in die Umgebung 11 bei dessen Inbetriebnahme, diese weitgehend durch visuelle Interaktionen durchzuführen. Beispielsweise projiziert das fahrerlose Transportfahrzeug 1 als visuelle Information 9 eine vorgegebene Zielposition. Der Ingenieur, welcher das fahrerlose Transportfahrzeug 1 in Betrieb nimmt, kann anhand der projizierten Zielposition in der Umgebung 11 unmittelbar überprüfen, ob diese mit der gewünschten Zielposition übereinstimmt, oder ob ggf. noch eine Kalibrierung von Sensoren des fahrerlosen Transportfahrzeugs 1 vorgenommen werden muss. Änderungen an der Konfiguration des fahrerlosen Transportfahrzeugs 1 können unmittelbar an der Projektion der visuellen Information 9 nachvollzogen werden.

Für Wartungszwecke eignet sich auch ein Szenario, bei dem das fahrerlose Transportfahrzeug 1 als visuelle Information 9 Elemente seiner internen Karte der Umgebung 11 projiziert. Ein dejustierter Sensor würde beispielsweise dazu führen, dass die Hindernis-Markierung 7 in Figur 3 nicht mehr mit dem Hindernis 3 zusammenfällt. Ein Wartungstechniker kann somit mit einem Blick erkennen, in welchem Zustand sich die Sensorik bzw. die interne Karte des fahrerlosen Transportfahrzeugs 1 befindet.

Weiterhin kann das fahrerlose Transportfahrzeug 1 während der Fahrt erkannte Hindernisse mit der visuellen Information 9 beleuchten. Die visuelle Information 9 kann hierzu als spezifisches Lichtmuster gewählt werden, welches es einem Techniker in der Nähe erlaubt, die jeweilige Situation schnell einzuschätzen und zu lösen.

Selbstverständlich können auch mehrere visuelle Informationen jeweils ortsfest projiziert werden, wie dies etwa zu Figur 3 beschrieben wurde.

Eine weitere Variante besteht darin, dass ein oder mehrere Projektoren ortsfest in der Umgebung installiert werden und beispielsweise Fahrwege und Kreuzungen von oben beleuchten. Über ein Kommunikationsnetzwerk kann das fahrerlose Transportfahrzeug seinen internen Zustand oder die daraus abgeleitete visuelle Information kommunizieren, sodass die visuelle Information über die fest installierten Projektoren in die Umgebung projiziert werden kann. Die hierzu erforderlichen Algorithmen und Rechenschritte können in Recheneinheiten des fahrerlosen Transportfahrzeugs 1, der Projektoren, auf Servern, in speicherprogrammierbaren lokalen Steuerungen oder in einer Cloud ausgeführt werden.

Obwohl die Erfindung durch die Ausführungsbeispiele im Detail illustriert und beschrieben wurde, ist sie nicht durch die offenbarten Beispiele eingeschränkt. Andere Variationen können vom Fachmann hieraus abgeleitet werden, ohne den Schutzumfang der Erfindung zu verlassen. Die beschriebenen Ausführungsbeispiele, Varianten, Ausführungsformen und Weiterbildungen können auch frei miteinander kombiniert werden.

## Patentansprüche

1. Fahrerloses Transportfahrzeug (1) zur Ausgabe einer erweiterten Realität,
- mit einer Recheneinheit (10), programmiert zur Erzeugung einer visuellen Information (9) in Abhängigkeit von einem internen Zustand des fahrerlosen Transportfahrzeugs,
- mit mindestens einem Projektor (8), und
- eingerichtet zur ortsfesten Projektion der visuellen Information auf eine Umgebung (11) des fahrerlosen Transportfahrzeugs.

2. Fahrerloses Transportfahrzeug nach Anspruch 1,
- wobei die Recheneinheit programmiert ist für eine Ansteuerung des Projektors zur ortsfesten Aufrechterhaltung der Projektion der visuellen Information auf der Umgebung während einer Fahrt des fahrerlosen Transportfahrzeugs durch die Umgebung.

3. Fahrerloses Transportfahrzeug nach einem der vorhergehenden Ansprüche,
- bei dem der Projektor zur ortsfesten Projektion der visuellen Information auf einen Boden der Umgebung und/oder auf Objekte in der Umgebung ausgerichtet ist.

4. Anordnung zur Ausgabe einer erweiterten Realität,
- mit mindestens einem fahrerlosen Transportfahrzeug (1),
- mit einer Recheneinheit (10), programmiert zur Erzeugung einer visuellen Information (9) in Abhängigkeit von einem internen Zustand des fahrerlosen Transportfahrzeugs,
- mit mindestens einem Projektor, welcher in einer Umgebung (11) des fahrerlosen Transportfahrzeugs stationär montiert ist, und
- eingerichtet zur ortsfesten Projektion der visuellen Information auf die Umgebung.

5. Verfahren zur Ausgabe einer erweiterten Realität,
- bei dem ein fahrerloses Transportfahrzeug (1) eine Umgebung (11) durchfährt,
- bei dem eine Recheneinheit (10) eine visuelle Information (9) in Abhängigkeit von einem internen Zustand des fahrerlosen Transportfahrzeugs erzeugt, und
- bei dem mindestens ein Projektor (8) die visuelle Information ortsfest auf die Umgebung projiziert.

6. Verfahren nach Anspruch 5,
- bei dem die visuelle Information eine in Ausführung befindliche Aktion des fahrerlosen Transportfahrzeugs, eine beabsichtigte Aktion des fahrerlosen Transportfahrzeugs, eine Bahnplanung des fahrerlosen Transportfahrzeugs, eine Geschwindigkeit des fahrerlosen Transportfahrzeugs, eine Zielposition des fahrerlosen Transportfahrzeugs und/oder ein Hindernis grafisch oder textuell symbolisiert.

7. Verfahren nach Anspruch 5 oder 6,
- bei dem die visuelle Information solange projiziert wird, wie sich ein Bereich, in dem die visuelle Information ortsfest auf die Umgebung projiziert wird, in einem Projektionsbereich (2) des Projektors befindet.

8. Verfahren nach Anspruch 5 oder 6,
- bei dem die visuelle Information projiziert wird, sobald das fahrerlose Transportfahrzeug einen vorgegebenen Abstand zu einem vorgegebenen Punkt unterschreitet.

9. Verfahren nach Anspruch 5 oder 6,
- bei dem die visuelle Information projiziert wird, sobald Sensoren des fahrerlosen Transportfahrzeugs ein Hindernis erfassen, welches nicht in einer Karte des fahrerlosen Transportfahrzeugs enthalten ist.

10. Computerlesbarer Datenträger,
- auf dem ein Computerprogramm gespeichert ist, welches das Verfahren nach einem der Ansprüche 5 bis 9 ausführt, wenn es in einem Prozessor abgearbeitet wird.

11. Computerprogramm,
- welches in einem Prozessor abgearbeitet wird und dabei das Verfahren nach einem der Ansprüche 5 bis 9 ausführt.
